# EUROPEAN PATENT APPLICATION

(11) **EP 2 129 098 A1**
(43) Date of publication of application: **02.12.2009**
(21) Application number: 08252932.2
(22) Date of filing: 03.09.2008
(51) Int. Cl.: H04N 1/04

(54) **A CMOS array sensor film scanner capable of executing the prevlew, scanning and storage functions without connecting with a computer**

(30) Priority: 30.05.2008 TW 97209446 U
(71) Applicant: EU3C Company Limited, Hong Kong (HK)
(72) Inventor: Hsu, Li Chi, Hong Kong (HK)
(74) Representative: Hocking, Adrian Niall

(57) **Abstract**

A CMOS (Complementary Metal Oxide Semiconductor) array sensor film scanner that can execute the preview, scanning and storage functions without connecting with a computer mainly comprises a main body (10) internally set with a frame body (20), and its bottom connected with a base (30) internally set with a backlight mechanism (32). It is **characterized in that** a PCBA (printed circuit board assembly) module (40) comprising a main board (41), function key board (42) and screen display panel (43) linked together is mounted on top of the frame body (20), a CMOS array image sensor module (44) of an image sensor (441) jointed with an optical camera lens (442) and an image processing and storage module (45) are set on the main board (41). An internal-set power processing device (31) is set in the base (30), and a backlight mechanism (32) is set at the position relative to the optical camera lens (442). And, a colored LCD (liquid crystal display) (11) and a memory card inserting hole (12) are set at the outside of the main body (10). The optical camera lens (442) is utilized to access the film images and focused to form images in the image sensor (441) then the images are transformed into digital data. And, the digitized image processing is proceeded through the image processing and storage module (45). And, the images can be previewed, edited and stored in memory card by the function button of colored LCD display (11) of the main body (10) or transferred to the computer. And, the images stored in the memory card can be inserted in the memory card inserting hole (12) then proceed directly the repeat playing or editing through image process software and scanning the image processing and storage module (45).

## Description

### BACKGROUND OF THE INVENTION

We all know that the traditional camera utilizes the light sensitive film (positive or negative film) as a photographic film. But this plastic based film is hard to be stored, the images will be lost or damaged after a period of time and the stored images are unable to be developed and printed again. The users are often regretted for that. Furthermore, the fixed images stored in the films are unable to be modified unless the usage of professional and expensive machines and tools. This is also a disadvantage while usage.

Accompanying with the advancement in the computers and digital technologies, a scanner designed for scanning normal documents or drawings, which further includes a backlight mechanism to scan negative film to transfer the film images into digital images is currently emerged in the market. But such apparatus has huge volume, heavy weight, and high cost. There are other designs to scan negative film independently, all of which are lack of utility in use on volume and cost and are not popular in the market yet.

The applicant of the present case believes the design of the said independent device that can transfer the traditional photographic film images into digital images is a design rich of creativeness. However, the applicant also finds that it is not ideal enough because, beside the complicated design, the said device can only be used while linking with the computer equipments. The device cannot be used independently to elaborate the functions. It causes the inconvenience in usage. At the same time, it is also found that the driver used in the said device while shooting the negative films can see only the negative images and cannot show the colors (positive image). Moreover, the necessary scanning time and the cost are unacceptable for most users.

Therefore, after the research and improvement, the inventor of the present case completes the present invention of a CMOS (Complementary Metal Oxide Semiconductor) array sensor film scanner that can execute the preview, scanning and storage functions without connecting with a computer, and let the functions of this kind of scanner elaborate to the perfection.

### SUMMARY OF THE INVENTION

The present invention is a CMOS array sensor film scanner that can execute the preview, scanning and storage functions without connecting with a computer. It is related to a device that can transfer the traditional photographic film images into digital data. The images on the films can be transformed into digital data quickly through a single main body with the easy operations of its internal backlight mechanism and optical camera lens, and can perform the digitizing image processing of previewing, editing then storing in the memory card through the color display outside the main body for easy storing and image modifying. It thus provides very convenient functions of egression carrying and usages. The structures and characteristics of the present invention will be described hereafter by referring to drawings.

### BRIEF DESCRIPTION OF THE DRAWINGS

Figure 1 is a three-dimensional drawing of an outside appearance according to the present invention.
Figure 2 to 4 are structural setting and implementing drawings of the present invention.
Figure 5 and 6 are structural drawing of the film trays.
Figure 7 is a perspective drawing showing an X-ray clamp according to the present invention.

### DETAILED DESCRIPTION OF THE PREFERRED EMBODIMENT

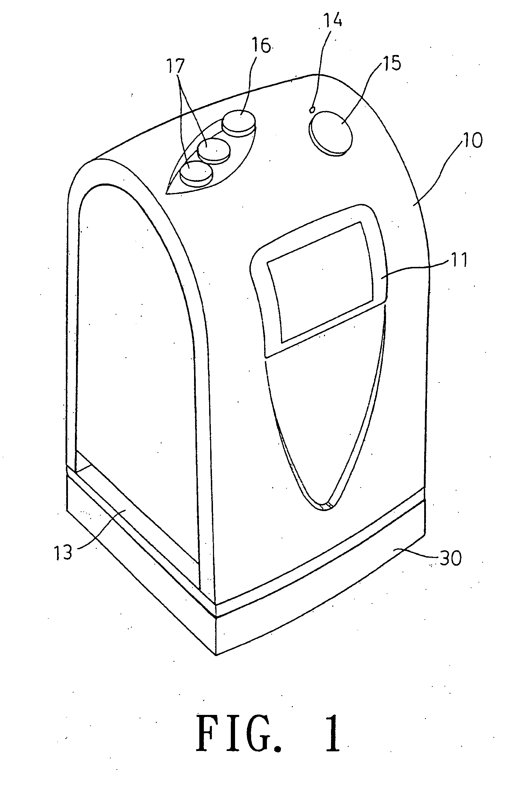

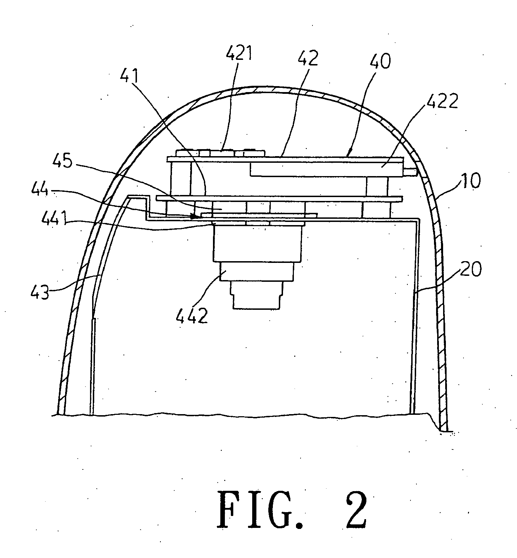

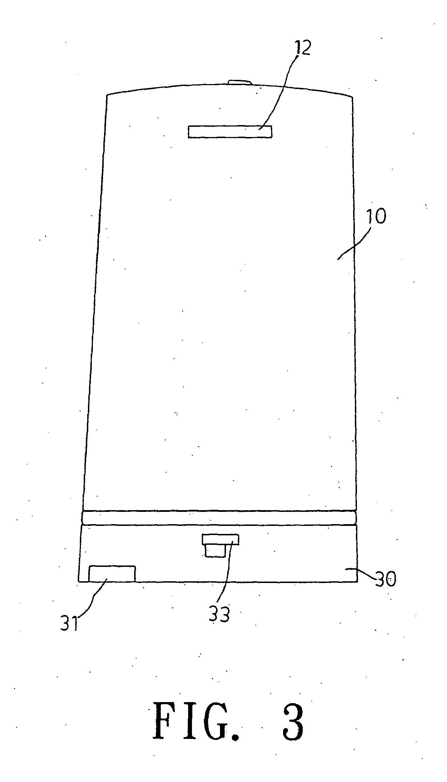

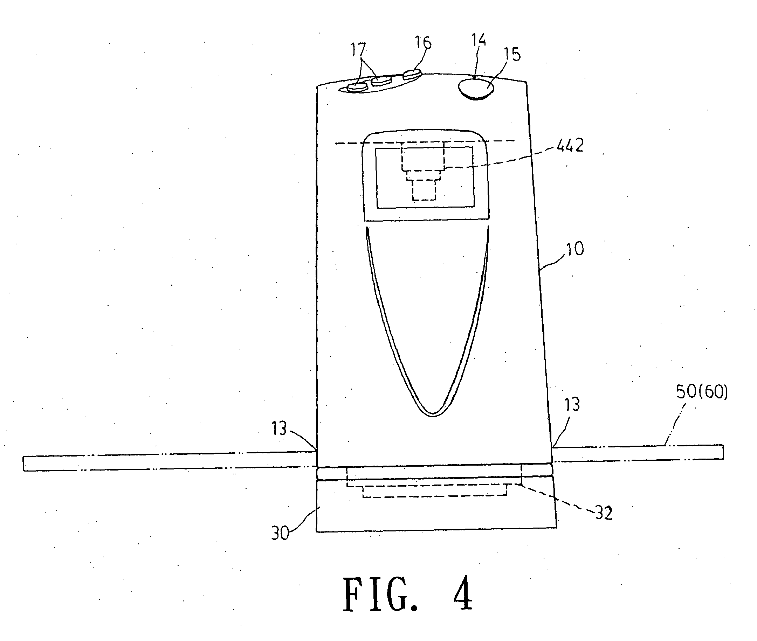

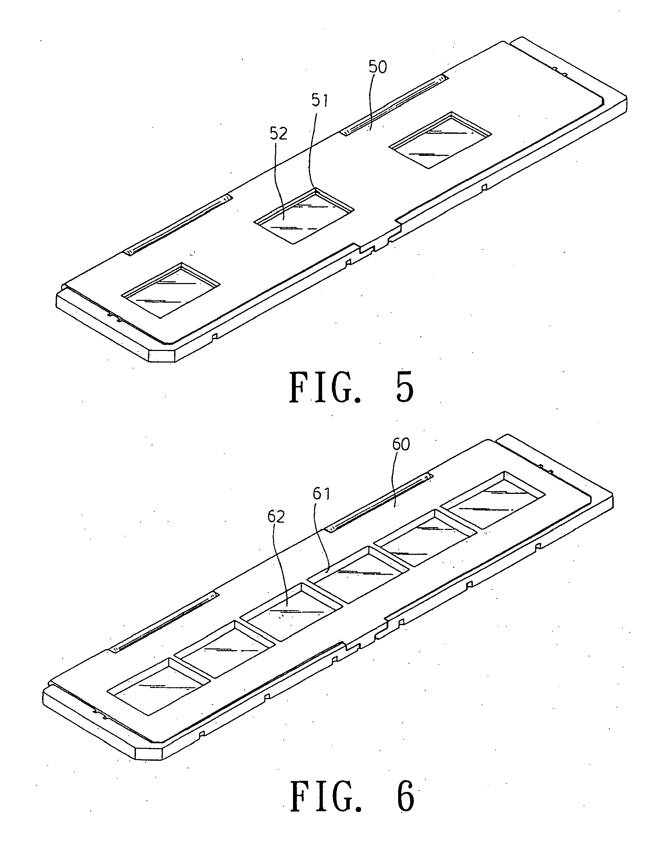

Please refer to figures 1 to 4. The present invention is to provide a CMOS array sensor film scanner that can execute the preview, scanning and storage functions without connecting with a computer. It mainly has a main body 10 internally set with a frame body 20, and with its bottom connected with a base 30 internally set with a backlight mechanism 32. The main feature is that a PCBA (printed circuit board assembly) module 40 composed of a main board 41, function key board 42 and screen display panel 43 linked together is mounted on top of the frame body 20 in the main body 10. An image sensor module 44 composed of an image sensor 441 (which can be a Complementary Metal Oxide Semiconductor image sensor) jointed with an optical camera lens 442 and an image processing and storage module 45 (which is jointed with the synchronous dynamic memory, flash memory and digital signal processing chips) are set on the main board 41. Each kind of required function switches 421 and memory card tray 442 are set on the function key board 42. And, the screen display panel 43 is jointed with the colored LCD (liquid crystal display) 11. An internal-set power supply device 31 capable of providing and conducting in the AC, DC or USB power is set on the base 30, and a LED light sourced backlight mechanism 32 and an USB link-inserting hole 33 are set at the positions relative to the optical camera lens 442. And, a colored LCD (liquid crystal display) 11 and a memory card inserting hole 12 are set at the outside of the main body 10. Furthermore, each long groove 13 is formed at left and right sides of the jointing sites between the main body and the base, and intercommunicated with each other. Also, a power indicating lamp 14, a shooting key 15, a power key 16 and an operation key 17 are set on top of the main body 10, and can be linked with the function switch 421 on the function key board 42. Furthermore, there are separately set with film trays 50, 60 used for clamp-setting the positive film 52 and negative film 62, shown in figure 5, and 6.

While using the present invention, firstly, the power key 16 is pressed and the power indicating lamp 14 is lightened. The film tray 50 (or 60) clamp-set with films is inserted in from one side of the long groove 13. Let the film of opening window 51 (or 61) on top of the backlight mechanism 32 and press the shooting key 15 after being aimed at the optical camera lens 442. It then activates the backlight mechanism 32 to emit the light to expose and show the image of the film. The optical camera lens 442 is utilized to access the film images and focused to form images in the image sensor 441 then the images are transformed into digital data. And, the digitized image processing is proceeded through the image processing and storage module 45. Through the screen display panel 43, the preview of images can performed directly by the colored LCD display 11 of the main body, or the images can be stored in the memory card after proceeding the editing through the function key 17. And, the images stored in the memory card is also proceeded the repeat playing or editing through image processing and storage module 45. Secondly, it can definitely cooperate with an external-connected USB conducting cable that can be inserted in the USB link-inserting hole 33 and linked with the host computer for usage.

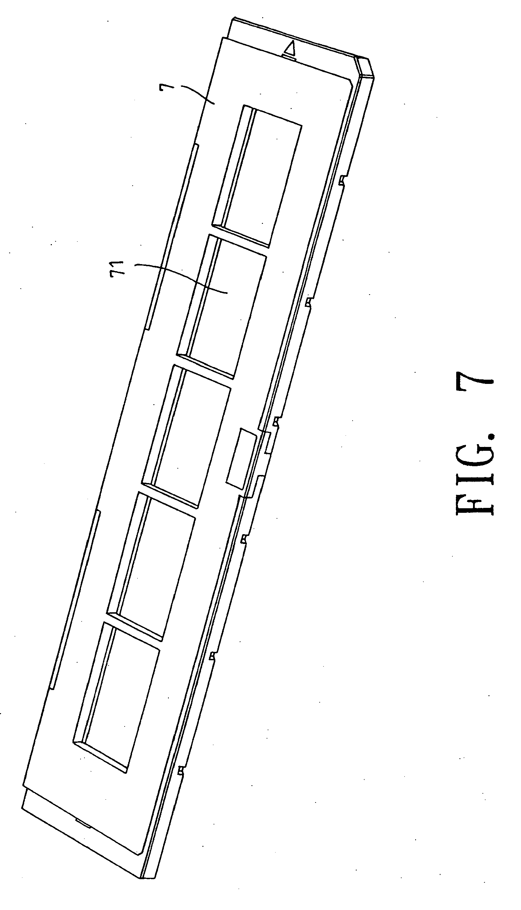

In the present invention, a timer can be connected with the backlight mechanism for automatic turn-off after no use a period of time that will save lifetime of the machine. And the apparatus can be applied for positive film, negative film, black-white film, and X-ray film 71 received in a related clamp 7, as shown in figure 7. It will be understood that the image created by the present invention can be colorful instead of conventional black-white reading model for negative film. Another improvement of this invention is that the image optical camera lens module includes compensative function in lighten degrees, which obtains the most reality performance of display color and obvious effect.

## Claims

1. A CMOS (Complementary Metal Oxide Semiconductor) array sensor film scanner that can execute the preview, scanning and storage functions without connecting with a computer, mainly having a main body (10) internally set with a frame body (20), and with its bottom connected with a base (30) internally set with a backlight mechanism (32), long grooves (13) are set at left and right sides of the jointing sites between the main body (10) and the base (30), and intercommunicated with each other; wherein it is **characterized in that** a PCBA (printed circuit board assembly) module (40) composed of a main board (41), function key board (42) and screen display panel (43) linked together is mounted on top of the frame body (20), a CMOS array image sensor module (44) of an image sensor (441) jointed with an optical camera lens (442) and an image processing and storage module (45) are set on the main board (41) and the screen display panel (43) is jointed with the colored LCD (liquid crystal display) (11) set outside of the main body (10); and it includes several controlled keys (14, 15, 16, 17) set outside of the main body (10) and inwardly linked to control each operation.

2. A CMOS array sensor film scanner that can execute the preview, scanning and storage functions without connecting with a computer as claimed in claim 1, wherein every kind of function switches (421) and a memory card tray (12) are set on the function key boards (42), and a power indicating lamp (14), a shooting key (15), a power key (16), an operation key (17) and a memory card inserting hole (12) are separately set at relative locations of the function switches (421) and memory card on top of the main body (10).

3. A CMOS array sensor film scanner that can execute the preview, scanning and storage functions without connecting with a computer as claimed in claim 1, wherein an internal-set power supply device (31) and a USB link-inserting hole (33) are set on the base (30).

4. A CMOS array sensor film scanner that can execute the preview, scanning and storage functions without connecting with a computer as claimed in claim 1, wherein the image sensor (441) is a complementary metal oxide semiconductor image sensor.

5. A CMOS array sensor film scanner that can execute the preview, scanning and storage functions without connecting with a computer as claimed in claim 1, wherein the image processing and storage module (45) is jointed with synchronous dynamic memory, flash memory and digital signal processing chips.

6. A CMOS array sensor film scanner that can execute the preview, scanning and storage functions without connecting with a computer as claimed in claim 1, wherein a timer is connected with the backlight mechanism for automatic turn-off after no use a period of time.

7. A CMOS array sensor film scanner that can execute the preview, scanning and storage functions without connecting with a computer as claimed in claim 1, wherein the image of negative film is in color.

8. A CMOS array sensor film scanner that can execute the preview, scanning and storage functions without connecting with a computer as claimed in claim 1, wherein the image optical camera lens module (442) includes compensative function in lighten degrees, which obtains the most reality performance of display color.

9. A CMOS array sensor film scanner that can execute the preview, scanning and storage functions without connecting with a computer as claimed in claim 1, wherein the apparatus can be applied for positive film, negative film, black-white film, and X-ray film (71).

## Amended claims

### Amended claims in accordance with Rule 137(2) EPC.

**1.** A CMOS (Complementary Metal Oxide Semiconductor) array sensor film scanner that can execute the preview, scanning and storage functions without connecting with a computer, mainly having a main body (10) internally set with a frame body (20), and with its bottom connected with a flat fixed base (30) internally set with a fixed backlight mechanism (32), long grooves (13) are set at lent and right sides at the joint between the main body (10) and the base (30), and intercommunicated with each other; wherein it is **characterized in that** a PCBA (printed circuit board assembly) module (40) composed of a main board (41) parallel or substantially parallel with the base (30), function key board (42) parallel or substantially parallel with the main board (41) and screen display panel (43) which is transverse to the main board (41), and main board (41), function key board (42) and screen display panel being linked together and the PCBA module being mounted on top of the frame body (20) and remote from the base (30), a CMOS array image sensor module (44) of an image sensor (441) joined with an optical camera lens (442) and an image processing and storage module (45) are set on the main board (41) and the screen display panel (43) is joined with a coloured LCD (liquid crystal display) (11) set on an outside of the main body (10); and including controlled keys (14, 15, 16, 17) set on the outside of the main body (10) and inwardly linked to control each operation.

**2.** A CMOS array sensor film scanner that can execute the preview, scanning and storage functions without connecting with a computer as claimed in claim 1, wherein every kind of function switches (421) and a memory card tray (12) are set on the function key boards (42), and a power indicating lamp (14), a shooting key (15), a power key (16), an operation key (17) and a memory card inserting hole (12) are separately set at relative
